# EUROPEAN PATENT SPECIFICATION

(11) **EP 1 986 537 B1**
(45) Date of publication and mention of the grant of the patent: **26.10.2011**
(21) Application number: 07750803.4
(22) Date of filing: 15.02.2007
(51) Int. Cl.: A47L 13/20

(54) **SURFACE TREATMENT ARTICLE COMPRISING A PLURALITY OF FLAPS, AND PREPARATION THEREOF**
OBERFLÄCHENBEARBEITUNGSMITTEL MIT MEHREREN KLAPPEN UND HERSTELLUNG DAVON
ARTICLE DE TRAITEMENT DE SURFACE COMPRENANT UNE PLURALITÉ DE VOLETS, ET PROCÉDÉ DE FABRICATION ASSOCIÉ

(30) Priority: 17.02.2006 GB 0603280
(43) Date of publication of application: 05.11.2008
(73) Proprietor: 3M Innovative Properties Company, St. Paul, MN 55133-3427 (US)
(72) Inventor: LE NORMAND, Jean, F-95006 Cergy Pontoise Cedex (FR)
(74) Representative: Towlson, Samantha Jayne
(86) International application number: PCT/US2007/003991
(87) International publication number: WO 2007/097982

(56) References cited:
- JP-A- 08 140 913
- KR-A- 940 023 417
- KR-Y1- 200 328 233
- US-A- 2 161 725
- US-A- 3 043 063
- US-A- 4 951 341
- US-A- 5 560 070

## Description

### FIELD

The present invention relates to a surface treatment article and its preparation. The invention particularly relates to abrasive articles comprising a plurality of flaps of abrasive material.

### BACKGROUND

Various surface treatment articles are known and they can have many uses in many industries.

FR 2388538, GB 2382023 and US 4951341, for example, disclose mops made from folds of absorbent material.

An example of a surface treatment article which comprises a plurality of abrasive flaps is the Scotch-Brite™ Finishing Flap Brush available from 3M Company of St. Paul, Minnesota, USA. These flap brushes are made of a plurality of flaps of Scotch-Brite™ non-woven abrasive material, whereby one edge of each flap is bonded to a central core. Manufacture of the brushes requires a large number of flaps to be cut out, usually by cutting a sheet of material into strips and then cutting the strips into flaps or by die cutting individual flaps from a sheet of material. The individual flaps must then be gathered, counted and arranged so that the edges of the flaps are in alignment with the edges of the other flaps. The flaps are secured together to form a circular brush by a central core made by two-part epoxy resin casting. Once secured together, the flaps are typically dressed to shave off those parts of the flaps which are not aligned with adjacent flaps. It is also known to arrange the flaps around an adhesive-coated, preformed core so that the flaps become stuck to the core by the adhesive.

Cutting the flaps, gathering and counting them, and accurately aligning them is time consuming, yet must be stringently adhered to, to ensure acceptable levels of quality. These factors increase the cost and production time.

Also, conventional methods often produce poor quality products since flaps which are not correctly aligned may not become glued to the central core and may, therefore, become loose before or during use.

US-A-3 043 063 describes an abrasive article comprising a continuous strip of buff material folded in accordion pleats along transverse lines and secured in the article. The buff material is arranged so that an edge of the strip of buff material provides an abrasive working surface (i.e. the folds in the material are orthogonal to the abrasive working surface). If it is required to provide an abrasive article comprising the equivalent of a plurality of abrasive flaps, an additional complex manufacturing step is needed, in which the pleated buff material is slit along the folds after it has been secured in the article.

The invention has been made with this point in mind.

### SUMMARY OF THE INVENTION

According to a first aspect of the invention, a method of making an abrasive article comprises Z-folding a piece of abrasive material to define a plurality of flaps, each flap having a first edge and an opposing second edge, and securing the flaps in that arrangement; **characterized in that** the Z-folded material is arranged so that the folds form the first and second edges, and so that the second edges define an abrasive working surface. The abrasive material may be a non-woven abrasive material comprising an open porous lofty fibrous web, possibly containing abrasive grains dispersed throughout the web, or a coated abrasive material.

Z-folded material is material which is folded a plurality of times, the folds being generally parallel to each other, so as to form a zig-zag. The folds can be evenly spaced or separated by varying distances, so as to form flaps of similar or different lengths.

This invention is advantageous since it greatly simplifies the manufacture of abrasive articles comprising a plurality of flaps of abrasive material. By forming the flaps from at least one piece of Z-folded material, the flaps do not need to be cut out individually; they do not need to be gathered after cutting; and they are automatically aligned with the other flaps since they are connected to the other flaps. This method is therefore much quicker than known methods and produces superior products.

Preferably, the method further comprises the step of forming partial cuts through the Z-folded material, the material being folded along the partial cuts. These partial cuts could be cuts made by scoring which do not extend through the full thickness of the material, or may each comprise a series of perforations i.e. a linear series of cuts which extend through the full thickness of the material but which are separated from adjacent cuts by regions which are not cut. This aids the folding of the piece(s) of material, and ensures that the folds are made in the correct place so as to form flaps of the desired size.

In one embodiment, the securing step comprises applying binder material adjacent the first edges and causing the binder material to cure to form a support to which the first edges are secured. Any suitable binder material can be used including, for example, a thermoplastic material in which case the securing step may include injecting molten thermoplastic material adjacent the first edges. In this case, before the securing step, Z-folded material can be placed in a mould cavity defined by first and second mould plates, the binder material being injected into the mould cavity to form the support. In some embodiments of the invention, a predetermined amount only of binder material is injected into the mould cavity.

A range of thermoplastic materials can be injection moulded as described above, and the selection of one suitable for a given use will be apparent to those skilled in the art.

The material is selected so that it will have a suitable viscosity at the injection temperature, generally 200 to 280°C. Exemplary thermoplastic materials include thermoplastic polyether ester elastomer block copolymers comprising hard (crystalline) segments of polybutylene terephthalate and soft (amorphous) segments based on long-chain polymether glycols commercially available from DuPont under the trade name HYTREL; polyamides such as nylon 66 e.g. commercially available from LATI Industria Termoplastic S.p.A. under the trade name LATAMID, and an injection moulding homopolymer available, under the trade name "CAPRON 8202hsbk 102", from BASF CANADA of Mississauga, ON, Canada; and polyolefins, such as polyethylene and polypropylene. The thermoplastic material may optionally contain filler and/or reinforcing fibres.

Suitable injection moulding machines for use in the invention are well known and may have vertical or horizontal orientations. A vertical orientation moulding machine provides an advantage since it facilitates controlling of the spread of the molten thermoplastic material. Suitable injection moulding machines are commercially available from Arburg GmbH under the trade name ALLROUNDER. Horizontal injection moulding machines are widely available and may also be used. As described below, in some cases the machine selected should be capable (following adaptation if necessary), of injecting only a specific, predetermined, amount of molten polymeric material.

Other binder materials suitable for use in the securing step of the present invention include thermoset and two-part epoxy resins. One suitable two-part epoxy resin comprises a mixture of Epon® Resin 828 (a bisphenol A diglycidyl ether epoxy resin) and Versamid® 125 (a polyamide curing agent), both available from Hexion Specialty Chemical Inc., of Columbus, Ohio, 43215, USA.

The abrasive article may have a variety of shapes, and so articles for a variety of uses may be made. For example, Z-folded material may be arranged in a curve, such as arcuately or elliptically, the first edges being located radially inwardly of the respective second edges, so that the working surface defined by the second edges is curved.

More specifically, Z-folded material can be arranged in a circle so that the working surface is cylindrical, the first edges defining a bore through the cylinder. In yet another embodiment, Z-folded material is arranged longitudinally so as to form a generally planar working surface. In this embodiment, the flaps may be substantially parallel, although that is not essential.

In embodiments where the Z-folded material is in a circular arrangement, a shaft may be positioned in the bore before applying binder material so that the shaft is secured to the Z-folded material when the binder material cures. Potting the shaft at the time of manufacture of the abrasive article in this way removes other process steps and is therefore particularly efficient compared with potting the shaft after the article has been formed.

It can be further advantageous to form a shaft from the binder material, such that the shaft is integral with the support, since it is not then necessary to obtain and position a separate shaft.

In these examples, an insert can be positioned in the bore to reduce the volume of binder material that is needed to fill the bore, thus reducing the manufacturing cost. The insert is preferably convex.

An alternative embodiment in which the Z-folded material is eventually in a circular arrangement involves initially arranging the folded material longitudinally and then closing the longitudinally-arranged material around a core coated with binder material so that the first edges are located radially inwardly of the respective second edges and define a bore through which the core extends, and so that the working surface defined by the second edges is cylindrical, the first edges contacting the binder material, thereby becoming fixed to the core.

In embodiments where the Z-folded material is arranged longitudinally to form a generally planar working surface, the support may form a handle which can be gripped by a user, so that the article can be hand-held. The support can be rectangular, though it can have other shapes. For example, the support may be ergonomically shaped so that it comfortably fits the hand of a user. It can extend beyond the periphery of the flaps to form an overhang so that it can be easily gripped by a user.

As mentioned above, said Z-folded material may comprise non-woven fibres forming an open porous lofty web of continuous three-dimensionally autogenously bonded filaments. The web may be impregnated with an adhesive binder and may contain a multitude of abrasive grains or granules dispersed throughout the web. The thickness, length and composition of the filaments and the type of adhesive binder and abrasive particles may be selected depending upon the intended application of the abrasive article. Suitable materials are known and disclosed, for example, in US 2,958,593, US 4,227,350, US 5,928,070 and US 6,302,930. An example is abrasive material commercially known as Scotch-Brite^{™} material, available from 3M Company of St. Paul, Minnesota, USA. In this case, where binder material is used to form a support to which the first edges are secured, the binder material may penetrate into interstices between the fibres.

The non-woven Z-folded material can be coated with a bonding substance before being folded, the bonding substance bonding the flaps together after the securing step. This ensures a bond between the faces of the flaps, as well as between their first edges, which can be beneficial since individual flaps cannot be separated at the working surface, even after abrasion of the working surface. Alternatively, a similar result can be achieved by dipping the non-woven material into a bonding substance after it has been folded.

Alternatively, said Z-folded material may be made of a coated abrasive material. Coated abrasive materials generally comprise a substrate to which a plurality of abrasive particles are bonded by suitable bond systems. Various coated abrasives are known to the person skilled in the art.

Other abrasive materials known to the skilled person can also be used.

Several abrasive articles can be made at once by cutting or slicing the article into two or more narrower articles.

According to a second aspect of the invention, an abrasive article comprises a plurality of flaps of abrasive material, each flap having a first edge and an opposing second edge, wherein at least some of the flaps are at least partially-joined to an adjacent flap at a fold in the material; **characterized in that** at least some of the first and second edges are formed by folds in the abrasive material, and in that the second edges define an abrasive working surface. Preferably, the abrasive material is selected from either non-woven fibres forming an open porous lofty web, possibly containing abrasive grains dispersed throughout the web, or a coated abrasive.

The abrasive article can optionally have any of the features described with respect to the above-mentioned method.

Embodiments of the invention will now be described, by way of example only, with reference to the accompanying drawings in which:
Figure 1 is a perspective view of an abrasive article according to this invention;
Figure 2 is a perspective view of a piece of abrasive material used to form the article of Figure 1;
Figure 3 is a cross section through a mould for making the article of Figure 1;
Figure 4 is a cross section through a mould for making another article according to this invention;
Figure 5 is a cross section through the article of Figure 4;
Figure 6 is a perspective view of another abrasive article according to this invention;
Figure 7 is a cross section through a mould for making the article of Figure 6.

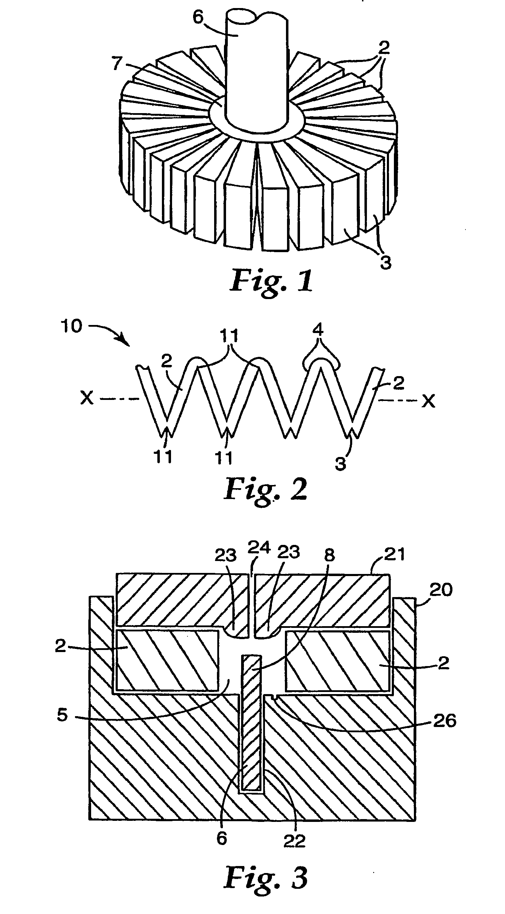

An abrasive article in accordance with the invention is shown in Figure 1. The article has a plurality of substantially planar flaps 2 in a circular arrangement. The flaps 2 are coupled to a shaft 6 so that the article can be mounted on a machine tool.

Each flap 2 has a first edge 4 (shown in Figure 2) and an opposing second edge 3, both of which extend in an axial direction. The first edges 4 are located radially inwards of the second edges 3, such that the first edges define a bore 5 through the article. The second edges 3 define a cylindrical working surface.

The first edges 4 are secured to a central support 7 extending through the bore 5. It is this support which couples the flaps 2 to the shaft 6.

The flaps 2 are made of Scotch-Brite^{™} non-woven abrasive material, though other materials could be used. The support 7 is made of thermoplastic material, and the shaft 6 is made of metal.

The article of Figure 1 is made by taking an elongate rectangular piece of Scotch-Brite^{™} material 10 and making several, generally parallel, partial cuts 11 into the material. The cuts 11 extend along the width of the material, but do not extend fully through the material. The cuts are all made on the same side of the material, though it is possible for adjacent cuts to be made on opposite sides of the material. The cuts 11 aid correct, accurate folding of the material.

The cuts 11 are substantially parallel and substantially evenly spaced. The space between the cuts dictates the maximum length of the flaps in the radial direction of the finished article. However, in this example the radial length of the flaps 2 is less than the separation of the cuts 11 since the second edges 3 are dressed, as discussed below.

The piece of material 10 is Z-folded along the cuts, as shown in Figure 2. The material is then compressed in the direction x-x, and bent into a circular arrangement such that the cut part of the material is exposed at the second edges 3, whereas the cut at the first edges 4 is concealed by the fold in the material and is not exposed. Methods by which Z-folded material 10, possibly in more than one piece, can be bent into a circular arrangement are described below.

First 20 and second 21 mould plates, which together define a mould cavity, are shown in Figure 3. A shaft 6 is positioned in a recess 22 in the first mould plate 20 such that an end 8 of the shaft protrudes into the mould cavity. The end of the shaft is knurled or roughened to improve the adhesion between the shaft and the thermoplastic material, though this is not essential.

The folded material 10, possibly in more than one piece, is positioned in a circular arrangement in the mould cavity and the second mould plate 21 is closed. The second mould plate 21 is formed with a convex portion, forming a convex insert 23 which protrudes into the bore 5 defined by the first edges 4 of the flaps 2. The second mould plate 21 has a channel 24 through which molten thermoplastic material is injected into the mould cavity. The molten thermoplastic surrounds the end 8 of the shaft 6, fills the space remaining in the bore 5 defined by the first edges 4, and penetrates slightly into the interstices of the non-woven abrasive material 10. The thermoplastic material is allowed to cool and solidify.

The article is removed from the mould and may be dressed by removing material from the second edges 3 until the flaps 2 are no longer joined at their second edges 3.

The result is an abrasive article as described above with reference to Figure 1, in which the flaps 2 are secured in a circular arrangement to the shaft 6. The insert 23 on the mould plate 21 results in a concave depression in the end of the central support 7 remote from the shaft 6, and reduces the amount of thermoplastic material required to form the support. Alternatively, the insert 23 on the mould could be omitted so that the end of the central support 7 is flat, or it could be replaced by a concave inset so that the end of the central support 7 has a convex outwardly-extending shape.

If desired, a sleeve can be located in the bore 5 prior to the injection of the molten thermoplastic material as described in our co-pending PCT application entitled "SLEEVE FOR USE IN MAKING ABRASIVE ARTICLES" (claiming priority from UK patent application No. 0603192.6 of 17 February 2006).

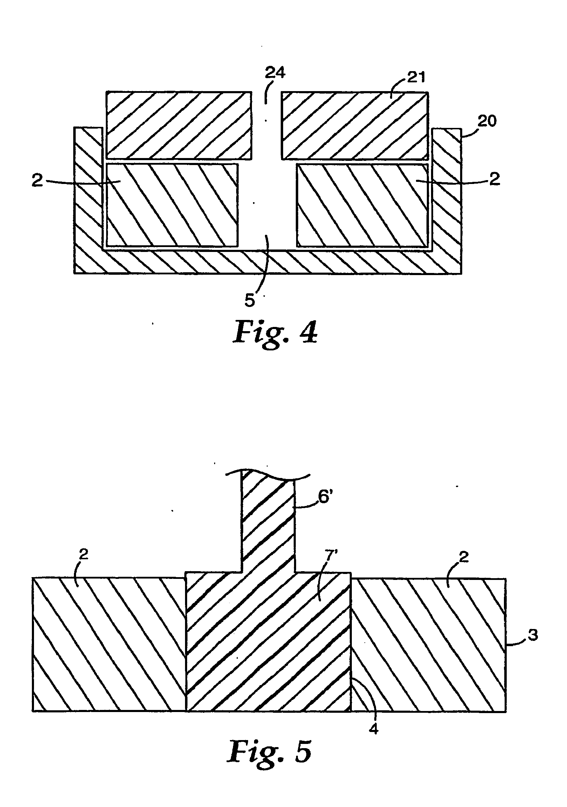

The mould shown in Figure 4 is used to make an abrasive article in accordance with another embodiment of the invention. In this embodiment, the first mould plate 20 is not formed with a recess to receive a metal shaft, and a metal shaft is not inserted into the mould cavity before injecting thermoplastic material. Instead, the channel 24 in the second mould plate 21 is sized and shaped so that, when sufficient thermoplastic material has filled the space in the bore 5 defined by the first edges 3, the thermoplastic material in the channel 24 is allowed to cool so as to form a thermoplastic shaft 6' which is integral with the support 7' formed in the bore 5.

When the thermoplastic material is hard, the article is removed from the mould and may be dressed as discussed above. Figure 5 shows the abrasive article made using the mould shown in Figure 4. It can be seen that the thermoplastic shaft 6' is integrally formed with the support 7'.

In the methods described above with reference to Figures 3 and 4, the extent to which the thermoplastic material of the central support 7, 7' penetrates into the folded non-woven material 10 can be controlled by injecting only a limited amount (i.e. a shot) of molten thermoplastic material into the mould cavity through the channel 24. The extent of penetration of the molten thermoplastic material will also be limited by the density of the compressed non-woven material 10.

Because the thermoplastic material is not actually required to fill the mould cavity in the methods described above with reference to Figures 3 and 4, the use of a closed mould cavity (although illustrated in Figures 3 and 4) is not essential.

For the purpose of the methods described above with reference to Figures 3 and 4, the Z-folded material 10 can be bent into a circular arrangement in the following manner, prior to being placed in the mould cavity. A similar method is already known for use when flap brushes are formed from individual flaps of abrasive material. The length of Z-folded material 10 is first compressed in the longitudinal direction to form a compacted stack. Then, while the compression is maintained, tape is applied to one side of the stack. The compressing force is then removed allowing the un-taped side of the stack to expand and, in turn, causing the material 10 to curl around into a circular arrangement that can be placed in the mould cavity of Figure 3 or Figure 4 as already described. Alternatively, for ease of handling, several pieces of Z-folded material 10 rather than one single piece, can be used to form the circular arrangement in the mould cavity. This will permit the use of spacers between the various pieces to hold them in position in the mould. If required, compression of the Z-folded material may take place within the mould itself by forming the cavity in the mould plate 20 with a larger-diameter entrance portion in which the Z-folded material is initially positioned before being forced, by the second mould plate 21 as the mould is closed, into a smaller-diameter portion of the mould cavity into which the molten thermoplastic material is injected.

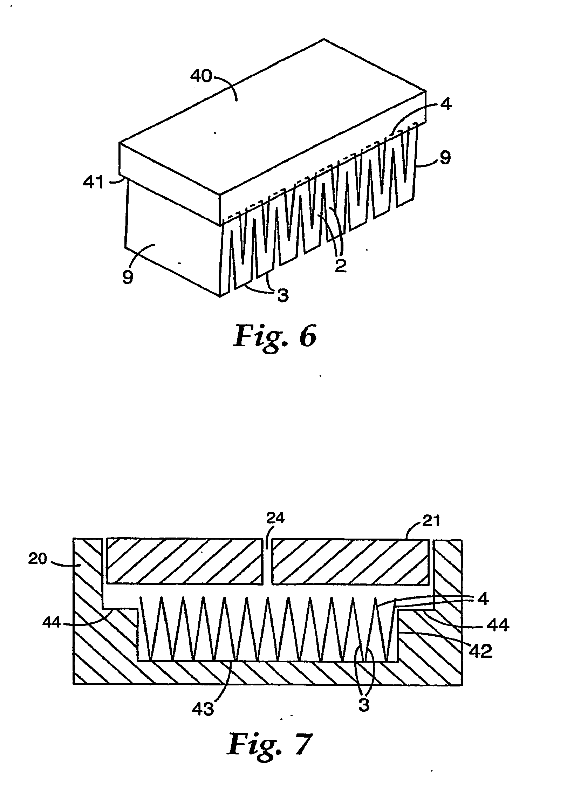

Another abrasive article of the invention is shown in Figure 6. This article is a hand-held brush. It has flaps 2 of Scotch-Brite^{™} non-woven abrasive material which are secured together in a longitudinal arrangement. As with previous examples, the flaps 2 each have a first edge 4 and a second edge 3. The first edges 4 are secured to a support 40 and the second edges 3 together form a generally planar working surface. The flaps 2 are made from a Z-folded rectangular piece of abrasive material 10, as shown in and described above with reference to Figure 2, and so each flap 2 is joined to an adjacent flap at their first ends 4. The planes of the flaps are substantially parallel, and the flaps 2 extend generally perpendicularly away from the support 40. It is possible, however, for the planes of the flaps to extend from the support at an angle of other than 90°, and also for the planes of the flaps to be inclined to one another.

The support 40 is rectangular and is relatively large, extending beyond the periphery of the flaps to form an overhang 41 for gripping. The support is made of thermoplastic material. The first edges 4 of the flaps 2 protrude into the support 40, and the thermoplastic material of the support fills some of the interstices between the fibres of the non-woven material.

The hand-held brush of Figure 7 is made by a similar method to the methods described above with reference to Figures 1 to 5. Naturally, the shape of the mould, which is shown in Figure 8, is different in this embodiment since the flaps are linearly arranged.

The first mould plate 20 has a rectangular recess 42 into which the Z-folded material 10 is placed. The folded material 10 is arranged in the recess so that the planes of the flaps 2 are generally perpendicular to a base 43 of the recess. A shoulder 44 surrounds the recess 42. The depth of the recess 42 is less than the height of the flaps 2 so that the first edges 4 of the flaps protrude from the recess 42 beyond the shoulder 44.

When molten thermoplastic material is injected through the channel 24 in the second mould 21 plate into the mould cavity, some of the plastic material penetrates into some of the interstices of the flaps. The rest of the cavity is filled with the plastic material to form the support 40. Due to the presence of the shoulder 44 the resultant support 40 is wider than the width of the flaps 2 and longer than the plurality of flaps together, thus providing the overhang 41.

When the thermoplastic material is cool and hard, the article is removed from the mould and the second edges 3 may be dressed by removing material from the folds until the flaps 2 are separated from adjacent flaps at their second edges 3. In this example, this results in the end flaps 9 being entirely free of adjacent flaps, since the second edges 3 are separated during dressing.

As described above with reference to Figures 3 and 4, the extent to which the thermoplastic material of the support 40 penetrates into the non-woven flaps 2 can be controlled by injecting only a limited amount (i.e. a shot) of molten thermoplastic material into the mould cavity through the channel 24 of Fig. 7. If the flaps 2 have been compressed together, the extent of penetration of the molten thermoplastic material may also be limited by the degree of the compression. If required, a restricting layer in the form of a mesh material may be placed over the first edges 4 of the folded non-woven material in the mould, to ensure that the injected thermoplastic material is evenly distributed across the mould cavity. Alternatively, or in addition, several injection channels may be provided in the mould rather than the single channel 24 as illustrated. When a restricting layer of mesh material is used it may, for example, have a mesh opening of up to 1000 micrometres and be formed from a plastic material such as polyamide or polypropylene, an organic material such as cotton or linen, or a metal such as steel. A suitable material, available under the trade name "Sefar(TM) Nitex(TM) 06-850/53" from Sefar AG, of Rueschlikon, CH-8803 Switzerland, is a monofilament open mesh fabric composed of polyamide 6 with a mesh opening of 850 micrometres, a filament diameter of 305 micrometres and a fabric thickness of 555 micrometres.
In a moulding process as described above with reference to Figs. 3, 4 and 7, the amount of thermoplastic material that is injected into the mould cavity can be controlled by means of a suitable valve (not shown) located in the channel 24 of the mould. The channel 24 is connected to a suitable supply of molten thermoplastic material under pressure so that, if the valve is opened for a predetermined interval of time, a predetermined amount of the thermoplastic material will be injected into the mould cavity, sufficient to form the central support 7, or the support and shaft 7', 6, or the backing 40 and to penetrate, to the desired extent, into the flaps 2 of abrasive material. The process thus differs from a conventional injection moulding process in which the injection of molten thermoplastic material into the mould would continue until the mould cavity has been filled. The process may, nevertheless, be carried out using a conventional injection moulding machine suitably-adapted for the purpose although, as already mentioned, because the mould cavity is never filled with the injected thermoplastic material, it is not actually essential for the mould to be closed. Through the use of such a process, it can be ensured that the injected thermoplastic material does not permeate throughout the abrasive material of the flaps 2 and, because the abrasive material is not subjected to the high pressures normally generated in the mould cavity of an injection moulding machine, the risk of structural damage to the abrasive material is minimized.

The valve used to control the amount of thermoplastic material injected into the mould cavity may be of any suitable type, one being an electromagnetically-controlled needle valve known for use in sprueless injection moulding. A suitable valve is an electromagnetic needle valve available, under the trade name "Z 1081" from HASCO Hasenclever GmbH + Co KG of Lüdenscheid, Germany. The opening of the valve can be controlled by the injection moulding machine itself.

In the various examples described above, the possibility is mentioned of dressing the surface treatment articles to separate the flaps 2 at the edges 3. That is not always essential, however, because the separation of the flaps at the edges 3 may occur comparatively quickly, in any event, during normal use of the surface treatment articles. The speed at which this occurs will depend on the nature of the junction between adjacent flaps at the edges 3. For example, in the case in which the location of the folds in the surface treatment material 10 is defined by cuts 11 in the material as described above with reference to Fig. 2, the depth of the cuts at the edges 3 will determine how quickly the surface treatment material will wear away at these edges. The cuts 11 may be so deep that, at the edges 3, the adjacent flaps of surface treatment material are joined together only at a few spaced-apart attachment points. Alternatively, if the surface treatment material is folded without the assistance of the cuts 11, there will be a greater amount of material to be removed at the edges 3 before adjacent flaps are separated from each other.

In an abrasive article in which the flaps 2 are highly compressed, it may be acceptable not to separate the flaps at the edges 3 before the article is put to use. In that case, a change may be apparent in the finish produced on the surface of the workpiece that is being abraded, as the folds in the non-woven material 10 wear away and the flaps 2 separate from each other: That change will occur because the abrasive action is exerted initially by a major surface of the non-woven material 10 and subsequently by the cut ends of the flaps 2. On the other hand, in an abrasive article in which the flaps are not compressed together, it is more likely to be a requirement that the flaps should be free and conformable to the workpiece that is being abraded and, consequently, more likely to be essential that the abrasive article should be dressed to separate the flaps before the article is put to use.

It will be appreciated that the folds in the material 10 at the first edges 4 do not have to be formed in the same way as the folds at the second edges 3. It has already been mentioned above that, when cuts 11 are formed in the material 10 to define the location of the folds, those cuts may be formed either on the same side, or on opposite sides of the material 10. In addition, the cuts that define the location of the folds at the first edges 4 may be of a different depth and/or form to the cuts that define the location of the folds at the second edges 3. It is also possible to form cuts in the material 10 to define only the location of one of the sets of folds (e.g. only the location of the folds at the second edges 3). In each case, the cuts may take the form of linear perforations.

An alternative method of making a cylindrical flap brush is described in our co-pending PCT application claiming priority from UK patent application No. GB 0603278.3 of 17 February 2006, titled ABRASIVE ARTICLE COMPRISING INDIVIDUAL ABRASIVE ELEMENTS SUCH AS FLAPS, AND MANUFACTURE THEREOF. An alternative form of hand-held flap brush is described in our co-pending PCT application claiming priority from UK patent application No. GB 0603275.9 of 17 February 2006, titled AN ABRASIVE ARTICLE FOR HAND-HELD, OR SIMILAR, USE AND PREPARATION THEREOF.

A method in accordance with the invention is illustrated by the following non-limiting example:

### Example

A non-woven abrasive web available, under the trade name "Cutting and Polishing Type A Medium Grade" from 3M Company of St. Paul, Minnesota U.S.A., is die cut into strips 270mm long and 45mm wide, each strip having eight transverse incomplete cuts spaced apart from each other, and from the ends of the strip, by 30mm. The transverse incomplete cuts are produced by a blade having two notches in its cutting edge so that the adjacent, 30mm long, sections of the strip remain connected by two tabs of uncut material. Four such strips are Z-folded at the locations of the transverse incomplete cuts and are placed in a mould as illustrated in Fig. 3 together with a nickel-plated steel shaft having a length of 59 mm and a diameter of 6 mm. A predetermined amount of low-viscosity polyamide 6 thermoplastic material, commercially available under the trade name "Ultramid(R) 8202 C" from BASF Corporation, of Wyandotte, MI 48192, USA. is injected into the mould cavity and allowed to cure, to bond the non-woven material to the shaft and form an abrasive flap brush of the type shown in Figure 1.

## Claims

1. A method of making an abrasive article, comprising Z-folding abrasive material (10) to define a plurality of flaps (2), each flap having a first edge (4) and an opposing second edge (3), and securing the flaps in that arrangement;
**characterized in that** the Z-folded material is arranged so that the folds form the first and second edges (4, 3), and so that the second edges (3) define an abrasive working surface,.

2. The method of claim 1, further comprising the step of forming partial cuts (11) through the Z-folded material, the material being folded along the partial cuts.

3. The method of claim 1 or claim 2, further comprising dressing the second edges (3) after the securing step so that the flaps (2) become separated from adjacent flaps at their second edges.

4. The method of any one of the preceding claims, wherein the securing step comprises applying binder material adjacent the first edges (4) and curing the binder material to form a support to which the first edges are secured.

5. The method of claim 4, wherein, before the securing step, the Z-folded material (10) is placed in a mould cavity defined by first and second mould plates (20, 21), the binder material being injected into the mould cavity to form the support.

6. The method of claim 5, in which a predetermined amount only of binder material is injected into the mould cavity.

7. The method of any one of the preceding claims, wherein the Z-folded material (10) is arranged in a circle, the first edges (4) being located radially inwardly of the respective second edges (3) so that the working surface is cylindrical and the first edges define a bore (5) through the cylinder.

8. The method of claim 7 when dependent on any one of claims 4 to 6, further comprising positioning a shaft (6) in the bore (5) before applying the binder material so that the shaft is secured to the Z-folded material when the binder material cures.

9. The method of any one of claims 1 to 6, wherein the Z-folded material is arranged longitudinally, to provide a generally planar working surface.

10. An abrasive article comprising a plurality of flaps (2) of abrasive material (10), each flap having a first edge (4) and an opposing second edge (3), wherein at least some of the flaps are at least partially-joined to an adjacent flap at a fold in the material; **characterized in that** at least some of the first and second edges (4, 3) are formed by folds in the abrasive material, and **in that** the second edges define an abrasive working surface.

11. The article of claim 10, wherein the flaps (2) are formed of at least one piece of Z-folded abrasive material (10).

12. The article of claim 10 or claim 11 made in accordance with the method of any one of claims 1 to 9.

## Patentansprüche

1. Verfahren zum Herstellen eines Schleifmittels, das Z-gefaltetes Schleifmaterial (10) zum Definieren mehrerer Klappen (2) aufweist, wobei jede Klappe eine erste Kante (4) und eine gegenüberliegende zweite Kante (3) aufweist, und Befestigen der Klappen in der Anordnung;
**dadurch gekennzeichnet, dass** das Z-gefaltete Material derart angeordnet wird, dass die Falten die ersten und zweiten Kanten (4, 3) ausbilden, und dass die zweiten Kanten (3) eine Schleifarbeitsfläche definieren.

2. Verfahren nach Anspruch 1, ferner aufweisend den Schritt des Ausbildens von Teileinschnitten (11) durch das Z-gefaltete Material, wobei das Material entlang der Teileinschnitte gefaltet wird.

3. Verfahren nach einem der Ansprüche 1 oder 2, ferner aufweisend derartiges Zurichten der zweiten Kanten (3) nach dem Befestigungsschritt, dass die Klappen (2) von benachbarten Klappen an ihren zweiten Kanten getrennt werden.

4. Verfahren nach einem der vorhergehenden Ansprüche, wobei der Befestigungsschritt das Auftragen von Bindermaterial den ersten Kanten (4) benachbart und Härten des Bindermaterials zum Ausbilden einer Stütze, an der die ersten Kanten befestigt werden, aufweist.

5. Verfahren nach Anspruch 4, wobei das Z-gefaltete Material (10) vor dem Befestigungsschritt in einem Formhohlraum angeordnet wird, der durch eine erste und zweite Formplatte (20, 21) definiert ist, wobei das Bindermaterial zum Ausbilden der Stütze in den Formhohlraum eingespritzt wird.

6. Verfahren nach Anspruch 5, wobei nur eine vorgegebene Menge an Bindermaterial in den Formhohlraum eingespritzt wird.

7. Verfahren nach einem der vorhergehenden Ansprüche, wobei das Z-gefaltete Material (10) in einem Kreis angeordnet wird, wobei die ersten Kanten (4) derart radial nach innen von den jeweiligen zweiten Kanten (3) angeordnet werden, dass die Arbeitsfläche zylindrisch ist und die ersten Kanten eine Bohrung (5) durch den Zylinder definieren.

8. Verfahren nach Anspruch 7, wenn von einem der Ansprüche 4 bis 6 abhängig, ferner aufweisend das derartige Positionieren einer Welle (6) in der Bohrung (5) vor dem Auftragen des Bindermaterials, dass die Welle durch das Z-gefaltete Material befestigt wird, wenn das Bindermaterial härtet.

9. Verfahren nach einem der Ansprüche 1 bis 6, wobei das Z-gefaltete Material längs zum Bereitstellen einer im Allgemeinen planen Arbeitsfläche angeordnet wird.

10. Schleifmittel mit mehreren Klappen (2) aus Schleifmaterial (10), wobei jede Klappe eine erste Kante (4) und eine gegenüberliegende zweite Kante (3) aufweist, wobei mindestens einige der Klappen mindestens teilweise mit einer benachbarten Klappe an einer Faltung in dem Material verbunden sind; **dadurch gekennzeichnet, dass** mindestens einige der ersten und zweiten Kanten (4, 3) durch Faltungen in dem Schleifmaterial ausgebildet sind, und dass die zweiten Kanten eine Schleifarbeitsfläche definieren.

11. Mittel nach Anspruch 10, wobei die Klappen (2) aus mindestens einem Stück von Z-gefaltetem Schleifmaterial (10) ausgebildet sind.

12. Mittel nach einem der Ansprüche 10 oder 11, das gemäß dem Verfahren nach einem der Ansprüche 1 bis 9 hergestellt ist.

## Revendications

1. Procédé pour fabriquer un article abrasif, comprenant le pliage en Z d'un matériau abrasif (10) afin de définir une pluralité de rabats (2), chaque rabat présentant un premier bord (4) et un second bord opposé (3), et la fixation des rabats dans cet agencement; **caractérisé en ce que** le matériau plié en Z est agencé de telle sorte que les plis forment les premiers et seconds bords (4, 3), et de telle sorte que les seconds bords (3) définissent une surface de travail abrasive.

2. Procédé selon la revendication 1, comprenant en outre l'étape qui consiste à former des découpes partielles (11) à travers le matériau plié en Z, le matériau étant plié le long des découpes partielles.

3. Procédé selon la revendication 1 ou la revendication 2, comprenant en outre le dressage des seconds bords (3) après l'étape de fixation, de telle sorte que les rabats (2) soient séparés des rabats voisins au niveau de leurs seconds bords.

4. Procédé selon l'une quelconque des revendications précédentes, dans lequel l'étape de fixation comprend l'application d'une matière liante à proximité des premiers bords (4), et le durcissement de ladite matière liante de manière à former un support auquel les premiers bords sont fixés.

5. Procédé selon la revendication 4, dans lequel, avant l'étape de fixation, le matériau plié en Z (10) est placé dans une cavité de moule qui est définie par des première et deuxième plaques de moule (20, 21), la matière liante étant injectée dans la cavité de moule afin de former le support.

6. Procédé selon la revendication 5, dans lequel une quantité prédéterminée seulement de la matière liante est injectée dans la cavité de moule.

7. Procédé selon l'une quelconque des revendications précédentes, dans lequel le matériau plié en Z (10) est agencé en un cercle, les premiers bords (4) étant situés radialement vers l'intérieur des seconds bords respectifs (3), de telle sorte que la surface de travail soit cylindrique et que les premiers bords définissent un alésage (5) à travers le cylindre.

8. Procédé selon la revendication 7 lorsqu'elle dépend de l'une quelconque des revendications 4 à 6, comprenant en outre le positionnement d'un arbre (6) dans l'alésage (5) avant d'appliquer la matière liante, de telle sorte que l'arbre soit fixé au matériau plié en Z lorsque la matière liante durcit.

9. Procédé selon l'une quelconque des revendications 1 à 6, dans lequel le matériau plié en Z est agencé de façon longitudinale de manière à présenter une surface de travail essentiellement plane.

10. Article abrasif, comprenant une pluralité de rabats (2) constitués d'un matériau abrasif, chaque rabat présentant un premier bord (4) et un second bord opposé (3), dans lequel au moins certains des rabats sont au moins partiellement joints à un rabat voisin à un pli dans le matériau ; **caractérisé en ce qu'**au moins certains des premiers et seconds bords (4, 3) sont formés par des plis dans le matériau abrasif, et **en ce que** les seconds bords définissent une surface de travail abrasive.

11. Article selon la revendication 10, dans lequel les rabats (2) sont constitués d'au moins une pièce de matériau abrasif plié en Z (10).

12. Article selon la revendication 10 ou la revendication 11, fabriqué suivant le procédé selon l'une quelconque des revendications 1 à 9.
